# EUROPEAN PATENT APPLICATION

(11) **EP 4 596 479 A1**
(43) Date of publication of application: **06.08.2025**
(21) Application number: 25154541.4
(22) Date of filing: 28.01.2025
(51) Int. Cl.: B66F 9/075

(54) **INDUSTRIAL TRUCK WITH IMPROVED BATTERY LOCKING SYSTEM**

(30) Priority: 01.02.2024 IT 202400002094
(71) Applicant: Toyota Material Handling Manufacturing Italy S.p.A, 40132 Bologna (IT)
(72) Inventor: NARDELLA, Andrea Federico, 40033 Casalecchio di Reno (BO) (IT); DELIZIOSI GIORDANO, Simone, 40128 Bologna (IT)
(74) Representative: Hoffmann Eitle

(57) **Abstract**

An electrical industrial truck (10) comprising a frame (11) in which there is present a compartment (12) configured to house an electric battery, said compartment comprising a lateral opening for removing/introducing the electric battery from/into the compartment, the industrial truck further comprising a locking element (13) of the battery configured to move between an opening position in which the locking element (13) allows to remove the battery through the lateral opening of the compartment and a closing position in which the locking element (13) prevents the extraction of the battery through the lateral opening of the compartment during the operation of the industrial truck; the truck further comprises actuator means (14) connected to the locking element (13) and configured to move the locking element between the opening position and the closing position, and control means connected to the actuator means and configured to control the actuator means so as to bring the locking element to the closing position or to the opening position.

## Description

### Field of the invention

The present invention relates to an industrial truck and, more in general, an electrically powered industrial truck provided with an improved door for the battery compartment.

### Technical background

It is known in the art to make industrial trucks provided with material handling means, such as a forklift, which can be used for example in an industrial site, a warehouse, a port or the like. The forklift can be coupled to different material handling devices, such as a fork, a gripper, a rod for material in reels or other.

In recent years, industrial trucks have become increasingly widespread, powered electrically by a battery. An example of an electrically powered industrial truck includes a battery housed in a dedicated compartment in the truck frame. The battery can be removed laterally from the compartment through a lateral opening, for example for battery replacement or maintenance intervention. During the operation of the truck, the battery is kept fixed in an operating position inside the compartment by means of a mechanical locking system that prevents the translation thereof in an outward direction of the compartment itself. The locking system can be manually brought into an opening position, which allows the battery to be removed from the truck.

Using the known locking systems, however, it has been noted that it is not possible to guarantee a high degree of safety in the use of the industrial truck. In fact, during battery replacement or assembly operations, it may happen that the operator forgets to operate the locking system in order to fix the battery in the operating position inside the compartment; in doing so, it is possible that the battery undergoes significant translations during use (for example during cornering) of the industrial truck, unbalancing the truck's attitude or even damaging some of the parts thereof. In addition, the operations for removing the battery from the truck require manual intervention by the operator for unlocking the locking system, thus making battery pack replacements more costly and long-lasting. This can impact the efficiency of industrial truck work cycles.

### Summary of the invention

An object of the present disclosure is to provide an electric industrial truck that is capable of increasing safety during operation, and of facilitating the removal of the battery from the truck.

In light of the above, the present disclosure proposes an electric industrial truck comprising a frame in which there is present a compartment configured to house an electric battery, said compartment comprising a lateral opening for removing/introducing the electric battery from/into the compartment, the industrial truck further comprising a locking element of the battery configured to move between an opening position in which the locking element allows to remove the battery through the lateral opening of the compartment and a closing position in which the locking element prevents the extraction of the battery through the lateral opening of the compartment during the operation of the industrial truck;
characterized in that it further comprises actuator means connected with the locking element and configured to move the locking element between the opening position and the closing position, and
control means connected to the actuator means and configured to control the actuator means so as to bring the locking element to the closing position or to the opening position.

Preferably, the industrial truck further comprises a user interface configured to receive a command for closing or opening the locking element, the control means being configured to control the actuator means so as to bring the locking element to the closing or opening position depending on the command received by the user interface.

Preferably, the actuator means comprise an electric motor, preferably brushless, whose stator is fixed to the frame of the truck and whose rotary shaft is connected to the locking element.

Preferably, the locking element comprises an arm rotatable between the opening position and the closing position.

Preferably, the arm is fixed at one end to a rotary shaft of the actuator means and at the other end to a resting element configured to prevent the movement of the battery outside the compartment when the locking element is in the closing position.

Preferably, the resting element includes a plate which in turn includes a layer made of elastic material and a layer made of rigid material to which the elastic material is fixed; wherein the layer made of elastic material is faced towards the compartment when the locking element is in the closing position and the layer made of rigid material is fixed to the arm.

Preferably, the control means are configured to emit an alert signal if the industrial truck is moving and the locking element is detected not to be in the closing position, or if a malfunction of the actuator means is detected.

Preferably, the industrial truck further comprises mechanical stop means configured to be engaged in a corresponding seat in the actuator means so as to prevent the movement of a movable part of the actuator means and lock said movable part in a position corresponding to the closing position of the locking element.

Preferably, the mechanical stop means includes a pin adapted to be engaged in a first hole in a fixed part of the actuator means and in a second hole in the movable part of the actuator means, wherein the first hole and the second hole are aligned when the locking element is in the closing position.

Preferably, the control means are configured to end the emission of the alarm signal when the mechanical stop means are detected to be in the corresponding seat in the actuator means.

Preferably, the control means are configured to prevent the movement of the industrial truck if it is detected that the locking element is not in the closing position, wherein the position of the locking element is detected by the control means through a detection of an actuation status of the actuator means.

Preferably, said compartment being open at the lower part to allow the removal/introduction of the electric battery from/into the compartment using transportation means that supports the electric battery at the lower part.

The present disclosure also relates to a system comprising the industrial truck and a battery configured to be housed within the battery-holder compartment and to be locked in an operating position within the battery-holder compartment by the locking element.

### Brief description of the drawings

The present invention will be illustrated with reference to exemplary embodiments described with reference to the accompanying drawings.

In the drawings:
- figure 1 illustrates an industrial truck according to the present disclosure;
- figure 2 illustrates a locking element in a closing position in which it locks the battery in the respective compartment;
- figure 3 illustrates a locking element in a closing position in which it allows the battery to transit to the outside of the battery-holder compartment;
- figure 4 illustrates an exploded view of the locking element and the respective actuator,
- figure 5 schematically illustrates the control means of the industrial truck,
- figure 6 shows a control procedure followed by the control means of the industrial truck.

### Detailed description

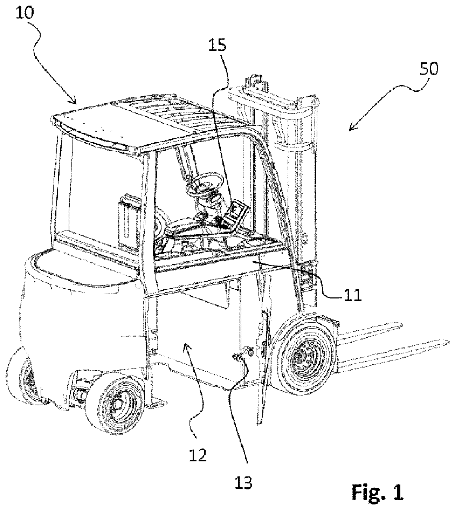

Referring to the figures, an electric industrial truck 10 according to the present disclosure is shown. The industrial truck 10 may for example be a forklift truck of the type illustrated in figure 1. The industrial truck 10 could advantageously be a counterbalanced truck. Still another type of industrial truck could be made according to the present disclosure. In general, the industrial truck may include material handling means 50; the material handling means may for example include a mast along which a material gripping device, such as a fork, a gripper, or other known devices, can slide in a substantially vertical direction. For example, the industrial truck 10 may be employed at industrial sites, warehouses, ports, airports, logistics hubs, or the like. The electric industrial truck 10 can be of the hybrid type (i.e. equipped with a traction or locomotion system that includes at least one electric motor and at least one combustion engine), or it could be completely electric (therefore with a traction system that does not include a combustion engine and instead includes only one or more electric motors).

The industrial truck 10 comprises a frame 11, in which there is present a battery-holder compartment 12 configured to house an electric battery. By "electric battery" is meant here any battery system or electrical energy storage system, such as for example a lithium battery, lead acid battery, or other types of battery, or a combination of a plurality of battery modules or packs of any type according to the known art.

The electric battery is configured to supply power to the main functions of the industrial truck, for example the locomotion function and/or the material handling function. For example, the electric battery may be configured to supply electric power to one or more electric motors constituting a traction system of the truck; in another example, the electric battery may supply electric power to one or more actuators configured to handle a load, for example for lifting by means of a fork.

The battery-holder compartment 12 advantageously extends between a front axle and a rear axle of the industrial truck. Preferably, the battery-holder compartment 12 extends in a longitudinal direction with respect to the industrial truck so as to occupy at least 50% of the gap between a front wheel and a rear wheel of the industrial truck, more preferably at least 70% of the gap between a front wheel and a rear wheel of the industrial truck. In this way, the battery-holder compartment 12 and the battery can occupy a sufficient volume to guarantee a desired autonomy of the industrial truck in terms of residual energy. Preferably, the battery-holder compartment 12 is positioned below a seat of a driver of the industrial truck. Preferably, the battery occupies substantially the entire volume of the battery-holder compartment 12 when it is in the operating position inside the compartment 12 itself. Preferably, the battery-holder compartment 12 extends in height over substantially the entire height of the frame below the cockpit or seat.

As well shown in figure 1, the battery-holder compartment 12 comprises a lateral opening for removing/introducing the electric battery from/into the battery-holder compartment. The opening extends longitudinally over substantially the entire extension of the battery-holder compartment 12. Preferably, the compartment 12 is open at the lower part to allow the removal/introduction of the electric battery from/into the compartment using transportation means that supports the electric battery at the lower part, for example a pallet truck or another forklift truck; however, another configuration of the compartment 12 could also be used in which the compartment is not open at the lower part and the battery is removed/introduced with another system, for example by means of a roller system.

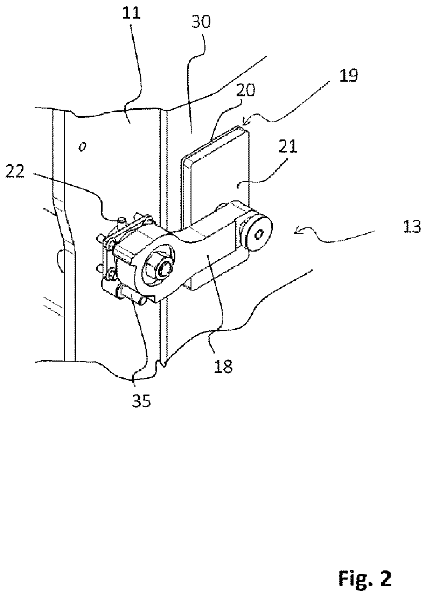

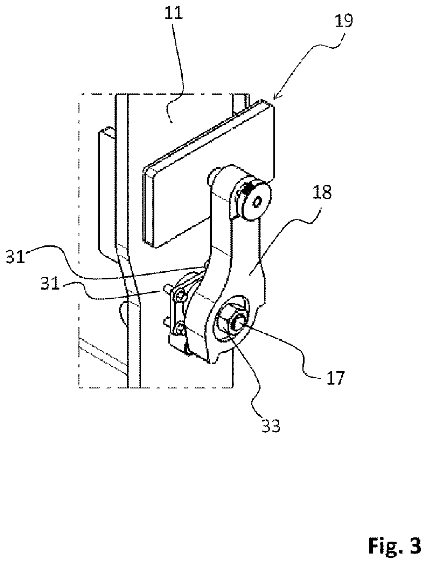

The industrial truck 10 further comprises a locking element 13 of the battery configured to move between an opening position in which the locking element 13 allows to remove the battery through the lateral opening of the compartment (see figure 3) and a closing position in which the locking element 13 prevents the extraction of the battery 30 through the lateral opening of the compartment during the operation of the industrial truck (see figure 2).

In one example, the locking element 13 comprises an arm 18 rotatable between the opening position and the closing position. The arm 18 in the closing position may advantageously be substantially horizontal, as shown in figure 2. In the opening position, the arm 18 may be substantially vertically positioned. However, other configurations of the locking element may also be considered, for example the locking element could be translatable between the two opening and closing position. Preferably, the locking element 13 can be movably mounted on the frame 11 to move between the opening position and the closing position. In one example, the locking element 13 may be mounted on a lateral wall of the frame 11, for example a substantially vertical wall. Preferably, the locking element 13 is mounted on a portion of the frame 11 adjacent to the opening of the battery-holder compartment 12. For example, the locking element may be mounted on the right or left side of the opening of the compartment 12, as shown respectively in figure 1 and 2.

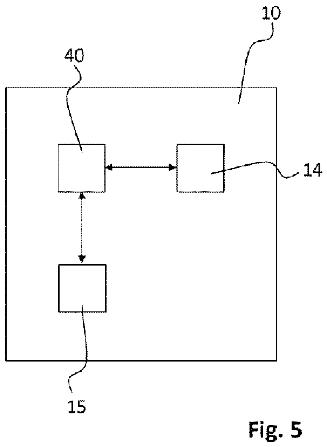

The industrial truck 10 further comprises actuator means 14 connected to the locking element 13 and configured to move the locking element between the opening position and the closing position; as schematically shown in figure 5, the industrial truck 10 also comprises control means 40 connected to the actuator means 14 and configured to control the actuator means so as to bring the locking element 13 to the closing position or to the opening position. For example, the control means 40 are configured to control the movement of the locking element 13 from the closing position to the opening position and vice versa.

The control means 40 may be realized with a control unit of any known type, for example with a centralized control device or with a distributed architecture of multiple control devices. For example, the control means could be made with a controller connected to a bus on board the machine (for example a CAN bus, or other type), where a user interface periphery 15 and an actuator means 14 control board are also connected to the bus. The functions described therein of the control means 40 could be realized with an MCB (main control board) or also be implemented in the electronic control board of the user interface 15, or of the armrest of the user seating.

The user interface 15 may be configured to receive a command for closing or opening the locking element 13 from a user of the industrial truck. The control means 40 are advantageously configured to control the actuator means 14 so as to bring the locking element to the closing or opening position depending on the command received from the user interface 15. In a preferred embodiment, the user interface 15 can be realized with a touchscreen, but a keyboard, a joystick or other input interfaces could also be realized. Preferably, the user interface is positioned close to the user's seat, for example embedded on an armrest of the seat as shown in figure 1.

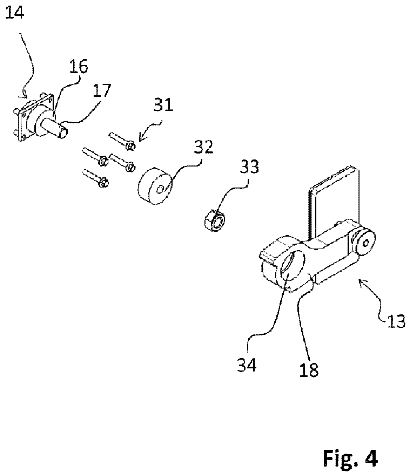

In a preferred example illustrated in figures 2-4, the actuator means 14 include an electric motor, preferably brushless, whose stator 16 is fixed to the frame 11 of the truck and whose rotary shaft 17 is connected to the locking element 13. In one embodiment, the stator 16 is fixed to the frame 11 by releasable fixing means 31, for example by screws. The rotary shaft 17 can be threaded and receive through screwing a cylindrical disc 32 provided with a central through hole. The cylindrical disc 32 is then fixed to the rotary shaft 17 by means of a nut 33 which is screwed onto the shaft 17. The cylindrical disc 32 is received by interlocking in a seat 34 formed on the arm 18, although another type of mechanical engagement is also possible to make the cylinder 32 and the arm 18 integral. As shown in figure 2, an end-of-stroke element 35 is also fixed on the frame 11, for example in the form of a pin parallel to the shaft 17, which limits the rotation of the arm 18 at the closing position and/or the opening position.

Preferably, the arm 18 is fixed at one end to the rotary shaft 17 of the actuator means 14 and at the other end to a resting element 19 configured to prevent the movement of the battery outside the compartment when the locking element 13 is in the closing position. In the operating position, the battery 30 (see figure 2) is arranged between the side of the frame 11 opposite to the opening of the compartment 12 and the locking element 13, which limit its possibility of movement in a transverse direction with respect to the frame. In the closing position of the locking element 13, the resting element 19 is positioned with minimum distance from the wall of the battery 30 housed in the compartment 12, for example less than 5 mm, preferably less than 1 mm, to avoid significant lateral movement of the battery 30.

In a preferred embodiment as shown in figures 2-4, the resting element 19 includes a plate, for example of rectangular shape. The plate 19 in turn includes a layer made of elastic material 20 (e.g. rubber) and a layer made of rigid material 21 to which the elastic material is fixed; and the layer made of elastic material 20 is faced towards the compartment 12 (and the battery 30) when the locking element is in the closing position, while the layer made of rigid material 21 is fixed to the arm 18. This allows to avoid damage to the battery 30 during operation of the truck 10, while maintaining a rigid structure and a desired positioning of the resting surface of the locking element.

The control means 40 are configured to control the emission of an alert signal if the industrial truck is moving and the locking element 13 is detected not to be in the closing position, or if a malfunction of the actuator means 14 is detected. The alert signal can be visual and/or audible. The alert signal may be emitted via the user interface 15. The malfunction of the actuator means 14 can be detected for example through a message sent on the bus on board the machine by a control board associated with the actuator means 14.

Preferably, the industrial truck 10 further comprises mechanical stop means 22 (shown in figure 2) configured to be engaged in a corresponding seat in the actuator means 14 so as to prevent the movement of a movable part 17 (for example the rotary shaft) of the actuator means and lock said movable part 17 in a position corresponding to the closing position of the locking element 13, as shown for example in figure 2. The mechanical stop means 22 can be used for example when a malfunction of the actuator 14 is detected; for example, if the actuator 14 is not able to guarantee the locking element 13 being maintained in the correct closing position, use can be made of the mechanical stop means in order to maintain the locking element in the operating position of figure 2. In this way it is possible to operate the industrial truck even if the actuator means have a fault.

Some types of electric motors give zero torque (0 Nm) in case of absence of electric current or malfunction. This means that in case of power supply problems, the battery locking system is again operable by hand. In the locked battery position, however, the system is labile, in this case a pin 22 can be added, or in general an element along with the system, which locks the rotation of the motor 14, in such a way as to ensure the closing position thereof and prevent the locking element 13 from inadvertently opening during the movement of the machine.

In particular, the mechanical stop means include a pin 22 adapted to be engaged in a first hole in a fixed part 16 of the actuator means 14 and in a second hole in the movable part 17 of the actuator means 14, where the first hole and the second hole are aligned when the locking element 13 is in the closing position. In the example shown, the pin 22 prevents the rotation of the shaft of the electric motor 14. For example, the stop means can be used by an operator who has detected the alert (or alarm) signal emitted by the truck in the event of a malfunction.

Preferably, the control means 40 are configured to end the emission of the alarm signal when the mechanical stop means 22 are detected in the corresponding seat in the actuator means 14. For this purpose, the truck 10 may have a sensor for detecting the engagement of the pin 22 in the actuator 14, for example a position sensor or another type of sensor.

Preferably, the control means are configured to prevent the movement of the industrial truck 10 if it is detected that the locking element 13 is not in the closing position; for example, the control means 40 may ignore a driving command imparted by the user of the truck. The position of the locking member 13 is detected by the control means 40 by a detection of an actuation status of the actuator means 14, or by a position sensor configured to monitor the position of the locking member 13.

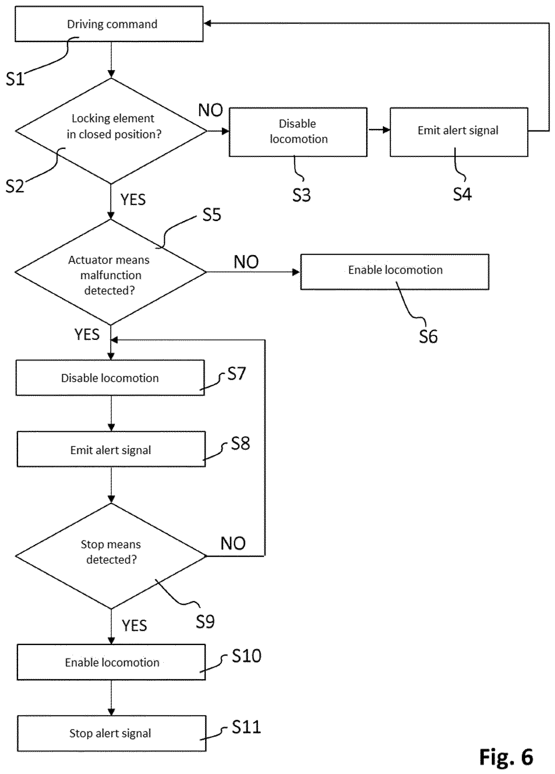

Figure 6 schematically shows the operation of the control means 40 according to an embodiment.

In step S1 the controller 40 (or control means 40) receives a driving command imparted by the user via an interface, e.g. an acceleration pedal.

In step S2 the controller 40 checks the position of the locking element 13. If the locking element 13 is in the closing position, step S5 begins, otherwise, step S3 begins.

In step S3, since the locking element 13 is not in the closing position, driving, i.e. locomotion, is disabled. In this case, for example, the driving command (e.g. acceleration via pedal) is not transferred to the electric motor of the industrial truck.

Step S3 then is followed by step S4, in which an alert signal is emitted to the user, for example by means of a visual signal on a truck screen or by means of an acoustic signal, for example in voice form. Step S4 and step S3 could also be performed simultaneously or in reverse order.

In step S5, in case the locking member 13 is in the closing position, the controller 40 checks that there are no malfunctions of the actuator 14. This check can be carried out for example by means of diagnostics through a check of signals transmitted from the control board of the actuator 14 on the on-board bus. If it is checked that the actuator 14 has no malfunction, step S6 begins, where driving is enabled. Therefore, the driving commands are transmitted by the controller 40 to the respective locomotion systems.

If, on the other hand, a malfunction of the actuator 14 is detected, step S7 begins, in which locomotion is disabled, and step S8 begins, in which an alert signal is emitted. Step S7 may be the same as step S3. Step S8 may be the same as step S4, or similar but with a different alert message, in which the malfunction of the actuator 14 is specified. The alert signal of step S8 may also suggest to the user to use the mechanical stop means 22.

Step S8 is followed by step S9, in which the controller 40 checks whether the mechanical stop means 22 have been engaged in the actuator 14. If not, it is returned to step S7 and S8, that is, the driving continues to be prohibited and the alert signal is still emitted.

If, instead, in step S9 the mechanical stop means 22 correctly engaged in the actuator 14 are detected, step S10 begins where driving is enabled (similarly to step S6) and possibly step S11 begins where the emission of the alert signal is interrupted.

As apparent from the above description, the system according to the present disclosure allows to increase safety of use of the industrial truck, reducing the time necessary for battery replacement and preventing the industrial truck from being able to move if the battery is not secured in the operating position.

## Claims

1. An electric industrial truck (10) comprising a frame (11) in which there is present a compartment (12) configured to house an electric battery, said compartment comprising a lateral opening for removing/introducing the electric battery from/into the compartment, the industrial truck further comprising a locking element (13) of the battery configured to move between an opening position in which the locking element (13) allows to remove the battery through the lateral opening of the compartment and a closing position in which the locking element (13) prevents the extraction of the battery through the lateral opening of the compartment during the operation of the industrial truck;
**characterised in that** it further comprises actuator means connected with the locking element (13) and configured to move the locking element between the opening position and the closing position, and
control means (40) connected to the actuator means and configured to control the actuator means so as to bring the locking element to the closing position or to the opening position.

2. An industrial truck according to claim 1, further comprising a user interface (15) configured to receive a command for closing or opening the locking element (13), the control means (40) being configured to control the actuator means (14) so as to bring the locking element to the closing or opening position depending on the command received by the user interface (15).

3. An industrial truck according to claim 1 or 2, wherein the actuator means comprise an electric motor, preferably brushless, whose stator (16) is fixed to the frame (11) of the truck and whose rotary shaft (17) is connected to the locking element (13).

4. An industrial truck according to one or more of claims 1 to 3, wherein the locking element (13) comprises an arm (18) rotatable between the opening position and the closing position.

5. An industrial truck according to claim 4, wherein the arm (13) is fixed, at one end, to a rotary shaft (17) of the actuator means (14) and, at the other end, to a resting element (19) configured to prevent the movement of the battery outside the compartment when the locking element (13) is in the closing position.

6. An industrial truck according to claim 5, wherein the resting element (19) includes a plate which in turn includes a layer made of elastic material (20) and a layer made of rigid material (21) to which the elastic material is fixed; wherein the layer made of elastic material is faced towards the compartment (12) when the locking element is in the closing position and the layer of rigid material is fixed to the arm (18).

7. An industrial truck according to one or more of claims 1 to 6, wherein the control means (40) are configured to emit an alert signal if the industrial truck is moving and the locking element (13) is detected not to be in the closing position, or if a malfunction of the actuator means is detected.

8. An industrial truck according to one or more of claims 1 to 7, further comprising mechanical stop means (22) configured to be engaged in a corresponding seat in the actuator means (14) so as to hinder the movement of a movable part (17) of the actuator means and lock said movable part (17) in a position corresponding to the closing position of the locking element (13).

9. An industrial truck according to claim 8, wherein the mechanical stop means include a pin (22) adapted to be engaged in a first hole in a fixed part (16) of the actuator means (14) and in a second hole in the movable part (17) of the actuator means (14), wherein the first hole and the second hole are aligned when the locking element (13) is in the closing position.

10. An industrial truck according to claims 7 and 8, wherein the control means (40) are configured to end the emission of the alarm signal when the mechanical stop means (22) are detected to be in the corresponding seat in the actuator means (14).

11. An industrial truck according to one or more of claims 1 to 10, wherein the control means (40) are configured to prevent the movement of the industrial truck (10) if it is detected that the locking element (13) is not in the closing position, wherein the position of the locking element is detected by the control means through a detection of an actuation status of the actuator means (14).

12. An industrial truck according to one or more of claims 1 to 11 claims, in which said compartment (12) is open at the lower part to allow the removal/introduction of the electric battery from/into the compartment using transportation means that supports the electric battery at the lower part.
